# EUROPEAN PATENT SPECIFICATION

(11) **EP 2 827 746 B1**
(45) Date of publication and mention of the grant of the patent: **02.03.2016**
(21) Application number: 12722912.8
(22) Date of filing: 11.04.2012
(51) Int. Cl.: A47C 27/08, B60P 3/32, A47C 20/02

(54) **BED FOR CAMPERS, TRAILERS AND SIMILAR TRANSPORT VEHICLES**
BETT FÜR WOHNWAGEN, ANHÄNGER UND ÄHNLICHE TRANSPORTFAHRZEUGE
LIT POUR CARAVANES, REMORQUES ET VÉHICULES DE TRANSPORT SEMBLABLES

(30) Priority: 23.03.2012 IT MI20120460
(43) Date of publication of application: 28.01.2015
(73) Proprietor: Prisma di Meglioli Andrea, 41040 Fiorano Modenese (MO) (IT)
(72) Inventor: MEGLIOLI Andrea, I-41040 Fiorano Modenese (MO) (IT)
(74) Representative: Guella, Paolo
(86) International application number: PCT/IT2012/000102
(87) International publication number: WO 2013/140425

(56) References cited:
- US-A- 4 054 960
- US-A- 5 001 792
- US-A1- 2006 260 044
- US-A1- 2011 154 575
- US-B1- 6 231 114

## Description

### Field of application of the invention

The present invention refers to the sector of campers, trailers and more generally transport means having at least one space prepared in a manner such that its occupants can spend the night, resting on a bed; more specifically, reference is made to a bed for this vehicle type. In the following present description, with the word "camper" it is intended to identify all the vehicles of the aforesaid type comprising, for example, trailers, motor homes, low-profile campers, coach-built campers, vans, caravans and horse trucks with living quarters.

### Review of the prior art

Campers, trailers and similar transport means like US 2006/0260044 and US 2569641 are equipped with beds comprising a mattress abutted against a support base that can be removable, or connected to the frame of the vehicle in a rigid or movable manner, i.e. through mechanisms by means of which the bed, when not used, can be raised against the ceiling or placed vertically against a wall. There are also vehicles in which the bed acts as a false ceiling (liftable bed) and the roof is connected to mechanisms which, when it is time to go to sleep, are actuated in a manner so as to raise the roof from the false ceiling, thus creating a "bed space". In all the mentioned cases, when it is not used, the bed is placed against, or close to, a wall or the roof of the vehicle. During the day, in these positions, the bed thus comes to obstruct the passage of the light through the roof window and the windows possibly present on the walls or on the ceiling against which the bed is opposed, thus reducing the natural illumination of the living compartment of the vehicle and causing discomfort for the occupants, who might be obliged to employ artificial illumination.

In addition to obstructing the passage of light, the bed also prevents accessing the roof window and other windows, making it impossible for occupants to open them and aerate the zone.

### Objects of the invention

Therefore, the object of the present invention is to overcome the aforesaid drawbacks by indicating a bed for campers and analogous vehicles that does not reduce the natural illumination of the living compartment.

### Summay of the invention

A first object of the present invention is a bed for campers comprising a support base and a mattress abutted against said base, having a portion substantially permeable to light, as described in claim 1. Another object of the present invention is a mattress especially adapted for the bed of the invention.

Further characteristics of the present invention are described in the dependent claims.

Advantageously, when the bed is raised against the roof of the vehicle, or it is placed vertically against a wall of the same, the portion of the bed permeable to light is opposite a roof window or another window of the vehicle.

According to a first aspect of the invention, the mattress is of type known as the water mattress, and is completely permeable to light.

According to another aspect of the invention, the mattress comprises two separate portions, one portion defined "fixed" and one portion "movable" with respect to said fixed portion and placed at the portion of the bed permeable to light. According to another aspect of the invention, the support base of the bed is of mesh or stave type.

According to another aspect of the invention, the support base of the bed comprises a continuous surface substantially permeable to light, at least at the portion of the mattress permeable to light and air.

According to another aspect of the invention, the support base of the bed comprises a support surface having at least one hole, at the portion of the mattress permeable to light.

According to another aspect of the invention, the hole has a smaller surface area than that of said movable portion of the mattress. Advantageously, in this case, the movable portion of the mattress, when it is in its seat, abuts against the support base of the bed at the edge around the hole of the base.

### Advantages of the invention

The bed that is the invention object, when there are no people lying down thereon, allows the passage of the light that filters through the roof windows and the other windows against which the bed is opposed. Due to the fact that one portion of the mattress is removable, or in any case permeable to light, the light is able to at least partly filter through the bed.

In the embodiment in which the support base of the bed has a hole and the mattress has a removable portion, the removal of the latter from its seat not only allows the passage of light, but also allows the occupants of the living compartment to access the roof windows and the other windows against which the bed is opposed.

### Brief description of the figures

Further objects and advantages of the present invention will be clearer from the following detailed description of an embodiment thereof, given as a merely nonlimiting example, in which:
- **Figure 1** shows a schematic cross section of the interior of a "camper" type vehicle where the bed of the invention is indicated in a non-use position, raised against the ceiling at a partially-open roof window;
- **Figure 2** shows a perspective view of a mattress of the type known as water mattress, completely permeable to light;
- **Figure 3** shows a perspective view of a mattress in a classic package comprising two separate portions, a fixed portion and a removable portion;
- **Figure 4** shows a perspective view of a mattress support base of stave type;
- **Figure 5** shows a perspective view of a mattress support base of mesh type;
- **Figure 6** shows a perspective view of a mattress support base of the type with surface area, provided with a movable part.

### Detailed description of several preferred embodiments of the invention

In the following description, a figure may also be illustrated with reference to elements not expressly indicated in that figure but in other figures. The scale and proportions of the various depicted elements do not necessarily correspond to actual scale and proportions.

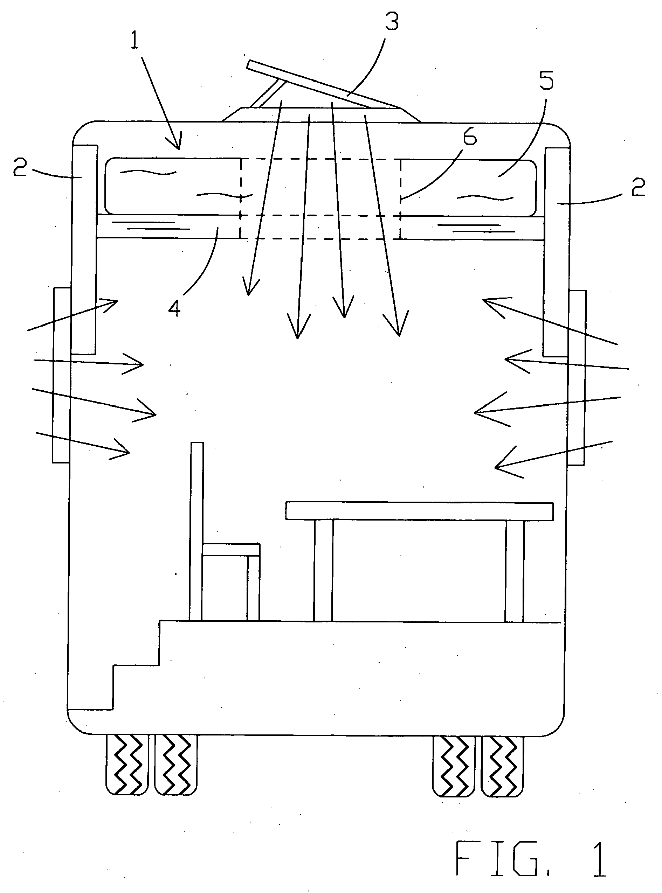

With reference to **figure 1**, a bed 1 is illustrated that is connected to the walls of the living compartment of a camper by means of lifting mechanisms 2 of various known type, by means of which the bed is raised against the roof of the living compartment, at a partially-open panoramic roof window 3. The bed 1 comprises a support base 4, at whose edges the lifting mechanisms 2 are connected, and a mattress 5 abutted against the base 4. The bed 1 has a portion 6 substantially permeable to light and opposite the roof window 3, so as to allow the light that crosses through the roof window to illuminate the living compartment of the camper.

The support base 4 and the mattress 5 of the bed 1 can be obtained in different forms, several of which are illustrated in the following figures.

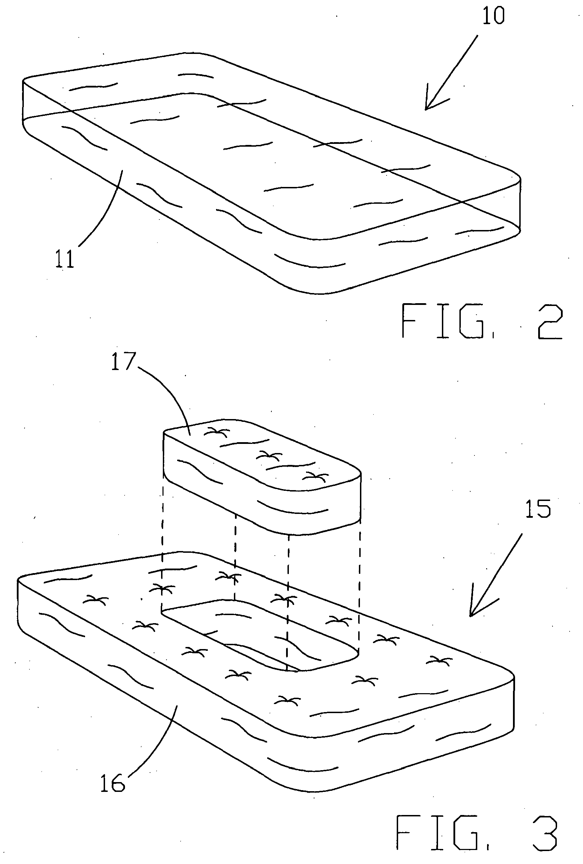

With reference to **figure 2**, a mattress 10 is illustrated of the type known as water mattress, comprising a parallelepiped container 11 made of plastic material substantially permeable to light and filled with water. The container can have internal walls (not shown in the figure) which divide the space enclosed by the container 11 into several non-communicating chambers, so as to limit the annoying undulating motion that is generated in the mattress 10 when people lie down or when a person already lying down moves. In such case, also the aforesaid internal walls are made of plastic material substantially permeable to light. As an alternative to the water, it is possible to fill the container 11 with any other fluid that is substantially permeable to light, such as compressed air. Since the mattress 10 comprises parts substantially permeable to light, when the bed of which the mattress 10 makes up part, is raised against the roof of the camper, the mattress 10 allows the light that crosses through the roof window 3 to illuminate the living compartment.

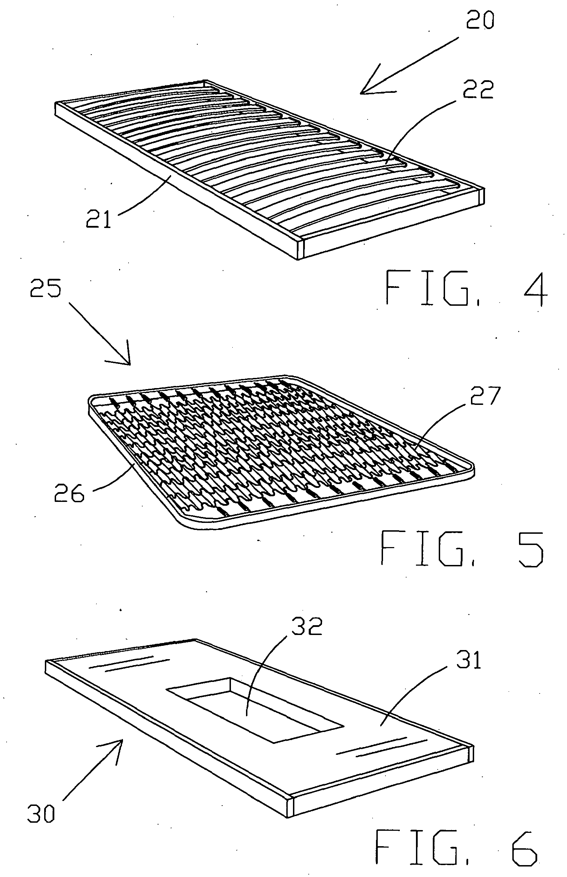

With reference to **figure 3**, a mattress 15 is illustrated comprising two separate portions: a fixed peripheral portion 16 that encloses, like a frame, a removable central portion 17. For the sake of simplicity, figure 3 only illustrates one type of mattress according to the invention, but it is clear that the removable portion 17 can be situated at any point of the mattress 15, whether at one of the ends or along the edges of the same. As an example, the mattress 15 can be of classic type, i.e. comprising a bag made of natural fiber fabric (cotton, linen, etc.) or synthetic fiber fabric, filled with a padding made of natural fiber (wool, cotton, down, etc.) or synthetic fiber (foam rubber, latex) or of spring mattress type, or of orthopedic mattress type or of ergonomic mattress type. The movable portion 17 of the mattress 15 is situated at the portion 6 substantially permeable to light of the bed 1 of figure 1. When the bed of which the mattress 15 makes up part, is raised against the roof of the camper, the movable portion 17 is removed in a manner so as to allow the light that crosses through the roof window 3 to illuminate the living compartment. Still in accordance with the invention, the movable portion 17 can be constituted by several side-by-side or superimposed portions. With reference to **figure 4**, a support base 20 is illustrated comprising a perimeter frame 21 to which a plurality of staves 22 are fixed, which are mutually parallel and spaced to each other. As an example, the frame 21 is made of metal while the staves 22 are made of wood. When the bed of which the support base 20 makes up part, is raised against the roof of the camper, the light that crosses through the roof window 3 filters between the staves 22, illuminating the living compartment.

With reference to **figure 5**, a support base 25 is illustrated comprising a perimeter frame 26 which supports a mesh 27. As an example, the frame 26 and the mesh 27 are made of steel. When the bed of which the support base 25 makes up part, is raised against the roof of the camper, the light that crosses through the roof window 3 filters between the links of the mesh 27, illuminating the living compartment.

With reference to **figure 6**, a support base 30 is illustrated comprising a surface 31 which has an opening 32 at the mattress portion that is permeable to light. As an example, the support base 30 can be made of wood, metal, aluminum or plastic material. The hole 32 is situated at the portion 6 substantially permeable to light of the bed 1 of figure 1. When the bed of which the support base 30 makes up part, is raised against the roof of the camper, the hole 32 allows the light that crosses through the roof window 3 to illuminate the living compartment. In order to ensure the weight support of the mattress when the mattress is in use, the coverage of the opening 32 can be made with a movable support (wood, aluminum, plastic material or another material), possibly inserting such support inside the movable portion 17 of the mattress.

If the bed 1 of figure 1 comprises the support base 30 of figure 6 and the mattress 15 of figure 3, the hole 32 of the base 30 preferably has a smaller surface area than that of the removable portion 17 of the mattress 15. In such a manner, when the removable portion 17 is in its seat, it abuts against the support base 30 at the edge around the hole 32.

A further embodiment of the support base 4 of the bed 1, not illustrated in the figures, comprises a surface made of a material substantially permeable to light, such as glass or plexiglass, at least at the portion 6, in a manner so as to allow the light that crosses through the roof window 3 to illuminate the living compartment.

Based on the description provided for a preferred embodiment, it is clear that several changes can be introduced by the man skilled in the art, without departing from the scope of the invention as results from the following claims.

## Claims

1. A ***camper*** bed (1) comprising a support base (4, 20, 25, 30) and a mattress (5, 10, 15) abutted against said base, **characterized in that *both said support base (4, 20, 25, 30) and said mattress (5, 10, 15) have*** a portion substantially permeable to light, **a *portion (6) of said bed (1) comprising said portion of the support base (4, 20, 25, 30) and said portion of the mattress (5, 10, 15), said portion (6) of the bed (1) being substantially permeable to light so that the light is able to filter, at least partially, through the bed (1) at said portion (6) of the bed (1).***

2. Bed according to claim 1, **characterized in that** said mattress (5, 10) comprises, ***at least at said portion of the mattress (5, 10) substantially permeable to light***, a container (11) made of material substantially permeable to light, said container (11) being filled with a fluid substantially permeable to light.

3. Bed according to claim 2, **characterized in that** said fluid is water.

4. Bed according to claim 1, **characterized in that** said mattress (15) comprises two separate portions, a fixed portion (16) and a movable portion (17) that is removable, ***said fixed portion (16) of the mattress (15) having a hole when said movable portion (17) is removed, said hole corresponding to said light substantially permeable portion of the mattress (15).***

5. Bed according to claim 1, **characterized in that** said support base (20) comprises a perimeter frame (21) to which a plurality of staves (22) are fixed, ***the light being able to filter, at least partially, between said staves (22).***

6. Bed according to claim 1, **characterized in that** said support base (25) comprises a perimeter frame (26) which supports a mesh (27), ***the light being able to filter, at least partially, between the links of said mesh (27).***

7. Bed according to claim 1, **characterized in that** said support base comprises a continuous surface substantially permeable to light at least at said light ***substantially*** permeable portion ***of the support base**.*

8. Bed according to claim 1, **characterized in that** said support base (30) comprises a surface (31) having a hole (32), ***said hole (32) corresponding to said light substantially permeable portion of the support base (30).***

9. Bed according to claim *8***, characterized in that *said support base (30) comprises a surface (31) having a hole (32), said hole (32)* of *the support base (30) corresponding to said light substantially permeable portion of the support base (30)***, said hole (32) ***of the support base (30) having*** a smaller surface area than that of ***said movable*** portion ***(17)*** of ***the*** mattress ***(15).***

## Patentansprüche

1. Camper-Bett (1), eine Stützbasis (4, 20, 25, 30) und eine mit der besagten Basis in Kontakt stehende Matte (5, 10, 15) umfassend, **dadurch gekennzeichnet, dass** sowohl die besagte Stützbasis (4, 20, 25, 30) als die besagte Matte (5, 10, 15) ein im wesentlichen lichtdurchlässiges Teil aufweisen, wobei ein Teil (6) des besagten Bettes (1) das besagte Teil der Stützbasis (4, 20, 25, 30) und das besagte Teil der Matte (5, 10, 15) umfasst, wobei das besagte Teil (6) des Betts (1) im wesentlichen lichtdurchlässig ist, derart, dass das Licht in der Lage ist, zumindest teilweise durch das Bett (1) beim besagten Teil (6) des Bettes (1) gefiltert zu werden.

2. Bett nach Anspruch 1, **dadurch gekennzeichnet, dass** die besagte Matte (5, 10), zumindest beim besagten Teil der Matte (5, 10), das im wesentlichen lichtdurchlässig ist, einen Behälter (11) aus einem im Wesentlichen lichtdurchlässigen Material umfasst, wobei der besagte Behälter (11) mit einer im wesentlichen lichtdurchlässigen Flüssigkeit gefüllt wird.

3. Bett nach Anspruch 2, **dadurch gekennzeichnet, dass** die besagte Flüssigkeit Wasser ist.

4. Bett s nach Anspruch 1, **dadurch gekennzeichnet, dass** die besagte Matte (15) zwei getrennte Teile, ein festes Teil (16) und ein entfernbares bewegliches Teil (17), umfasst, , wobei das besagte feste Teil (16) der Matte (15) ein Loch aufweist, wenn das besagte bewegliche Teil (17) entfernt wird, wobei das besagte Loch dem besagten im wesentlichen lichtdurchlässigen Teil der Matte (15) entspricht.

5. Bett nach Anspruch 1, **dadurch gekennzeichnet, dass** die besagte Stützbasis einen Umfangsrahmen (21) umfasst, mit dem eine Vielzahl von Leisten (22) befestigt sind, wobei das Licht in der Lage ist, mindestens teilweise zwischen den besagten Leisten (22) gefiltert zu werden.

6. Bett nach Anspruch 1, **dadurch gekennzeichnet, dass** die besagte Stützbasis (25) einen Umfangsrahmen (26) umfasst, welcher ein Netz (27) stützt, wobei das Licht in der Lage ist, zumindest teilweise zwischen den Maschen des besagten Netzes gefiltert zu werden.

7. Bett nach Anspruch 1, **dadurch gekennzeichnet, dass** die besagte Stützbasis eine kontinuierliche Oberfläche aufweist, die im wesentlichen zumindest beim besagten im wesentlichen lichtdurchlässigen Teil der Stützbasis, lichtdurchlässig ist

8. Bett nach Anspruch 1, **dadurch gekennzeichnet, dass** die besagte Stützbasis (30) eine Oberfläche (31) mit einem Loch (32) aufweist, wobei das besagte Loch (32) dem im wesentlichen lichtdurchlässigen Teil der Stützbasis (30) entspricht.

9. Bett nach Anspruch 8, **dadurch gekennzeichnet, dass** die besagte Stützbasis (30) eine Oberfläche (31) mit einem Loch (32) aufweist, wobei das besagte Loch (32) der Stützbasis (30) dem besagten im wesentlichen lichtdurchlässigen Teil der Trägerbasis (30) entspricht, wobei das besagte Loch (32) der Stützbasis (30) eine Oberfläche aufweist, die kleiner als diejenige des besagten beweglichen Teils (17) der Matte (15) ist.

## Revendications

1. Lit campeur (1) comprenant une base de support (4, 20, 25, 30) et un tapis (5, 10, 15) en contact contre ladite base, **caractérisé en ce que** soit ladite base de support (4, 20, 25, 30) soit ledit tapis (5, 10, 15) comportent une partie sensiblement perméable à la lumière, une partie (6) dudit lit (1) comprenant ladite partie de la base de support (4, 20, 25 , 30) et ladite partie du tapis (5, 10, 15), ladite partie (6) du lit étant sensiblement perméable à la lumière en manière que la lumière peut être filtrée, au moins partiellement à travers le lit (1) au niveau de ladite partie (6) du lit (1).

2. Lit selon la revendication 1, **caractérisé en ce que** ledit tapis (5, 10) comprend au moins au niveau de ladite partie du tapis (5, 10) sensiblement perméable à la lumière, un récipient (11) formé d'un matériau sensiblement perméable à la lumière, ledit récipient (11) étant rempli d'un fluide sensiblement perméable à la lumière.

3. Lit selon la revendication 2, **caractérisé en ce que** ledit fluide est de l'eau.

4. Lit selon la revendication 1, **caractérisé en ce que** ledit tapis (15) comprend deux parties distinctes, une partie fixe (16) et une partie mobile (17) qui est amovible, ladite partie fixe (16) du tapis (15) ayant un trou lorsque ladite partie mobile (17) est retirée, ledit trou correspondant à ladite partie du tapis (15) sensiblement perméable à la lumière.

5. Lit selon la revendication 1, **caractérisé en ce que** ladite base de support comprend un cadre (21) périphérique auquel une pluralité de lamelles (22) sont fixées, la lumière étant apte à être filtrée, au moins partiellement entre lesdites lamelles (22).

6. Lit selon la revendication 1, **caractérisé en ce que** ladite base de support (25) comprend un cadre périphérique (26) qui supporte un filet (27), la lumière étant apte à filtrer au moins partiellement entre les mailles dudit filet (27).

7. Lit selon la revendication 1, **caractérisé en ce que** II ladite base de support comprend une surface continue sensiblement perméable à la lumière, au moins au niveau de ladite partie de la base de support sensiblement perméable à la lumière.

8. Lit selon la revendication 1, **caractérisé en ce que** ladite base de support (30) comprend une surface (31) avec un trou (32), ledit trou (32) correspondant à ladite partie de la base de support (30) sensiblement perméable à la lumière.

9. Lit selon la revendication 8, **caractérisé en ce que** ladite base de support (30) comprend une surface (31) avec un trou (32), ledit trou (32) de la base de support (30) correspondant à ladite partie de la base de support (30) sensiblement perméable à la lumière, ledit trou (32) de la base de support (30) ayant une surface inférieure à celle de ladite partie mobile (17) du tapis (15).
